Europäisches Patentamt

European Patent Office

Office européen des brevets

(11) Veröffentlichungsnummer: **0 213 284**
**B1**

# (12) EUROPÄISCHE PATENTSCHRIFT

(45) Veröffentlichungstag der Patentschrift:
04.04.90

(51) Int. Cl.⁴: **B60D 1/00**

(21) Anmeldenummer: 86107434.2

(22) Anmeldetag: 02.06.86

(54) **Lagerung des Kupplungskörpers einer Anhängerkupplung in der Traverse.**

(30) Priorität: 27.08.85 DE 3530565

(43) Veröffentlichungstag der Anmeldung:
11.03.87 Patentblatt 87/11

(45) Bekanntmachung des Hinweises auf die Patenterteilung:
04.04.90 Patentblatt 90/14

(84) Benannte Vertragsstaaten:
AT CH DE FR IT LI NL SE

(56) Entgegenhaltungen:
EP-A- 0 000 325
DE-A- 2 206 617
DE-U- 1 708 881
DE-U- 1 900 470
FR-A- 2 452 394

(73) Patentinhaber: ROCKINGER Spezialfabrik für
Anhängerkupplungen GmbH & Co.,
Waldmeisterstrasse 80 Postfach 45 04 64,
D-8000 München 45(DE)

(72) Erfinder: Breu, Johann, Allgäuer Strasse 7,
D-8000 München 71(DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86(DE)

**Beschreibung**

Die Erfindung betrifft eine Lagerung des Kupplungskörpers einer Anhängerkupplung an einem Zugfahrzeug vermittels einer von dem Kupplungskörper ausgehenden Zugstange, wobei diese Zugstange eine Traversenbohrung einer am Zugfahrzeug angebrachten Traverse durchsetzt, wobei weiter die Zugstange in einem zu der Traversenbohrung konzentrischen Durchgang eines an der Traverse befestigten Lagerrohrs geführt ist, und wobei die Zugstange an dem Lagerrohr in beiden Kraftrichtungen, d.h. für Zug- und Schubkraftübertragung abgestützt ist.

Eine solche Zugstangenlagerung ist aus der DE-AS 27 32 610 bekannt. Bei dieser bekannten Ausführungsform durchsetzt das Lagerrohr die Traversenbohrung. Der Innenquerschnitt des Durchgangs des Lagerrohrs ist demnach kleiner als der Querschnitt der Traversenbohrung. Dies bedeutet, daß auch der Querschnitt der Zugstange am Orte des Durchgangs durch die Traversenbohrung und aus Montagegründen auf seiner ganzen Länge zwischen den Durchtrittsort und seinem freien Ende kleiner sein muß als der Querschnitt der Traversenbohrung.

Der Querschnitt der Traversenbohrung ist andererseits genormt, so daß sich für den Querschnitt der Zugstange ein wegen des endlichen Ringquerschnitts des Lagerrohrs am Orte des Durchgangs durch die Traversenbohrung nicht überschreitbares Maß ergibt, das kleiner ist als das Querschnittsmaß der Traversenbohrung. Dieses für den Querschnitt der Zugstange verfügbare Maß ist bisher stets als ausreichend angesehen worden.

Es wurde nunmehr von der Patentinhaberin erkannt, daß es unter gewissen Bedingungen doch günstiger wäre, den Querschnitt der Zugstange zu vergrößern, insbesondere im Hinblick auf Biege- und Scherbelastungen, die bei Ankuppeln von Zentralachsanhänger mit starrer Deichsel auftreten.

Der Erfindung liegt die Aufgabe zugrunde, eine Lagerung gattungsgemäßer Art so auszubilden, daß erhöhte Querkräfte, d.h. Kräfte quer zu der in Fahrtrichtung liegenden Achse des Kupplungskörpers in den Kupplungskörper eingeleitet werden können.

Zur Lösung dieser Aufgabe wird erfindungsgemäß vorgeschlagen, daß der Querschnitt der Zugstange im wesentlichen den vollen Querschnitt der Traversenbohrung einnimmt, und daß das Lagerrohr an der kupplungskörperfernen Seite der Traverse beginnend sich ausschließlich in Richtung von dem Kupplungskörper weg erstreckt.

Bei der erfindungsgemäßen Lösung nimmt also das Lagerrohr nicht mehr wie bisher einen Teil des Traversenbohrungsquerschnitts in Anspruch, so daß der Zugstangenquerschnitt auf das volle Maß des Traversenbohrungsquerschnitts erhöht werden kann. Es ist natürlich nicht notwendig, daß der Zugstangenquerschnitt exakt dem vollen Maß des Traversenbohrungsquerschnitts entspricht. Es genügt, wenn von der Querschnittsvergrößerungsmöglichkeit Gebrauch gemacht wird, die durch den Wegfall des Lagerrohrquerschnitts im Bereich der Traversenbohrung gegeben ist. Die Führung der Zugstange in dem Lagerrohr ist bei der erfindungsgemäßen Lösung mindestens ebenso gut wie bei der bekannten Lösung. Auch die Einbaubedingungen sind bei der erfindungsgemäßen Lösung nicht verschlechtert. Im Gegenteil: Man kann mit dem Kupplungskörper nunmehr noch näher an die Traverse herangehen und findet auf der Rückseite der Traverse in aller Regel ausreichenden Platz für das von der Traverse ausgehende und sich ausschließlich in Richtung vom Kupplungskörper weg erstreckende Lagerrohr.

Bei der erfindungsgemäßen Lösung ist es möglich, den Querschnitt der Zugstange in einem an die Traverse angrenzenden Längsabschnitt des Lagerrohrs in der Größe des Querschnitts der Traversenbohrung zu belassen, und dadurch die Querkraftbelastbarkeit des Kupplungskörpers weiter zu erhöhen.

Man könnte daran denken, die Abstützung für Schubkraftübertragung zwischen der Traverse einerseits und dem Kupplungskörper andererseits vorzusehen, so daß lediglich die Zugkraftübertragung im Bereich des kupplungskörperfernen Endes der Zugstange und des Lagerrohrs vorgesehen werden müßte. Diese Lösung hat allerdings den Nachteil, daß unterschiedliche Wandstärken der Traverse bei der Montage berücksichtigt werden müssen. Es wird deshalb einer Lösung der Vorzug gegeben, bei der die Zugstange an dem traversenfernen Endabschnitt des Lagerrohrs in beiden Kraftrichtungen abgestützt ist. Damit spielt die Wandstärke der Traverse für die Montage keine Rolle mehr. Je nach Wandstärke der Traverse vergrößert oder verkleinert sich nur der Abstand zwischen dem Kupplungskörper und der kupplungskörperseitigen Fläche der Traverse.

In Hinblick auf eine einfache Montierbarkeit wird vorgeschlagen, daß die Zugstange in Zugrichtung an einer Schulterformation des Lagerrohrs durch ein zugstangenseitiges Zugwiderlager abgestützt ist, welches nach Durchführung der Zugstange durch den Durchgang des Lagerrohrs an der Zugstange anbringbar ist und daß die Zugstange in Schubrichtung an einem Deckel oder Jochteil abgestützt ist, welcher nach dem Anbringen des Zugwiderlagers an der Zugstange auf das traversenferne Ende des Lagerrohrs aufgebracht wird.

Um der elastischen Zugkraftübertragung willen kann zwischen dem zugstangenseitigen Zugwiderlager und der Schulterformation ein ringförmiger Zugkraftpuffer angeordnet sein, der auch unter Vorspannung stehen kann, wie weiter unten noch im einzelnen angegeben werden wird. Um Überlastungen eines solchen Zugkraftpuffers zu vermeiden, kann zwischen dem zugstangenseitigen Zugwiderlager und der Schulterformation ein System von Zugwegbegrenzungsanschlägen vorgesehen sein etwa in der Weise, daß der Zugkraftpuffer axial zwischen einem dem Zugwiderlager anliegenden achsnormalen und radial auswärts weisenden Flansch eines L-Querschnittrings und einer ersten, radial äußeren Schulterfläche der Schulterformation untergebracht ist und daß die Zugwegbegrenzungsanschläge von einer zweiten radial inneren Schulterfläche der Schulterformation und dem zur Traverse hin gerichteten Ende eines achsparallel gerichteten, dem Zugkraftpuffer an seiner radial inneren Seite anliegenden Hülsenteils des L-Querschnittrings gebildet sind. Der Zugkraftpuffer kann dabei auch so zwischen die Flächen des L-Querschnittrings und der Schulterformation eingeschlossen sein, daß er von einer vorbestimmten Zugkraft ab voll einkorsettiert ist und deshalb selbst als Zugwegbegrenzungsanschlag wirkt dank seiner Volumeninkompressibilität.

Das Zugwiderlager wird nach einer bevorzugten Ausführungsform von einem Segmentring mit mindestens zwei Segmenten gebildet, welcher in einer Segmentringaufnahmenute der Zugstange aufgenommen und gesichert wird. Diese Ausführungsform verdient den Vorzug gegenüber anderen möglichen Ausführungsformen des Zugwiderlagers etwa mittels Schrauben, weil der Kräfteverlauf eindeutig kontrollierbar ist und weil keine Gefahr besteht, daß die am stärksten belasteten Flächen durch die Belastung für die Demontage und eine etwaige spätere Remontage störend deformiert werden.

Der Segmentring kann auf beliebige Weise gesichert werden. Bevorzugt wird zur Sicherung des Segmentrings ein Segmentumfassungsring vorgesehen der den Segmentring umgibt; dabei kann der Segmentfassungsring auf den Segmentring in axialer Richtung einerseits durch den achsnormalen Flansch des L-Querschnittrings und andererseits durch einen radial federnden Federring gesichert werden, wobei letzterer in eine Federringaufnahmenut in der Aussenumfangsfläche des Segmentrings eingefedert wird.

Zur Vermeidung von Kraftübertragungsstößen kann auch in Schubrichtung ein Schubkraftpuffer vorgesehen sein. Im Hinblick auf eine später noch zu erörtende Vorspannung empfiehlt es sich, diesen Schubkraftpuffer zwischen den traversenfernen Ende der Zugstange und dem Deckel- oder Jochteil anzuordnen.

Um Überlastungen des Schubkraftpuffers zu vermeiden, kann man zwischen der Zugstange und dem Lagerrohr Schubwegbegrenzungsanschläge vorsehen, die natürlich auch an fest mit der Zugstange bzw. dem Lagerrohr verbundenen Teilen, also etwa dem Deckel- oder Jochteil angebracht sein können.

Der Deckel- oder Jochteil kann mit dem traversenfernen Ende des Lagerrohrs verschraubt sein, wobei durch die Verschraubung gleichzeitig die Vorspannung in die Puffer, d.h. den Zugkraftpuffer und den Schubkraftpuffer eingebracht werden kann. Zur Verschraubung des Deckel- oder Jochteils mit dem Lagerrohr können im Gegensatz zu der bekannten Lösung nach der DE-As 27 32 610 mehrere Schrauben parallel eingesetzt werden, so daß die zur Aufbringung der Vorspannung notwendigen Anzugsmomente an den einzelnen Schrauben wesentlich kleiner werden können als bei der bekannten Lösung, was die Montage- und Demontage erleichtert. Hinzu kommt, daß man bei Anbringung von mehreren Schrauben diese in vereinfachter Weise sichern kann, z.B. durch einen Kleber, dies im Gegensatz zu der bekannten Lösung, nach der DE-AS 27 32 610, bei der die nur eine Mutter durch einen die Zugstange durchsetzenden Splint zu sichern war. Dabei ergab sich die Schwierigkeit, daß bis zum Erreichen der Splintmontagestellung die Mutter unter Umständen mit einem sehr hohen und deshalb nur mit Schwierigkeiten aufzubringenden Anzugsmoment angezogen werden mußte, dann nämlich, wenn in der vorherigen Splintmontagestellung (eine Umdrehung vorher) das vorgeschriebene Anzugsmoment noch nicht erreicht war.

Um im Falle eines Drehens des Kupplungskörpers um seine Achse eindeutig festzulegen, wo die Relativdrehung der in axialer Richtung belasteten Teile stattfindet, empfiehlt es sich, den Segmentring an der Zugstange in Umfangsrichtung festzulegen. Dann tritt die Relativdrehung zwangsläufig zwischen dem Segmentring und dem radial auswärts gerichteten Flansch des L-Querschnittrings ein, weil die Reibung des Zugkraftpuffers mit dem radial auswärts gerichteten Flansch sowohl als auch mit der Schulterformation eine Relativbewegung an diesen Stellen verhindert. Die Reibung bei solcher Drehbewegung läßt sich dann in definierter Weise auf das durch Sicherheitsvorschriften geforderte Maß des zum Verdrehen des Kupplungskörpers notwendigen Drehmoments (z.B. 100 Nm) einstellen.

Die Schubstange kann in dem Durchgang des Lagerrohrs unter Vermittlung einer Gleithülse insbesondere aus Kunststoff geführt sein, wie dies aus der DE-AS 27 32 610 an sich bekannt ist.

Das Lagerrohr kann mit mindestens einem Schmiernippel versehen sein, um die Gleitführung zwischen Zugstange und Durchgang des Lagerrohrs schmieren und nachschmieren zu können.

Die Befestigung des Lagerrohrs an der Traverse kann durch Anflanschen erfolgen, wie dies aus der DE-AS 27 32 610 bekannt ist.

Die beiliegenden Figuren erläutern die Erfindung. Es stellen dar:

Fig. 1 die Lagerung einer Anhängerkupplung gemäß der Erfindung in Übersicht teilweise geschnitten;

Fig. 2 einen Schnitt nach Linie II-II der Fig. 1; und

Fig. 3 einen Längsschnitt entsprechend dem Schnitt gemäß Fig. 1 in vergrößerter Darstellung.

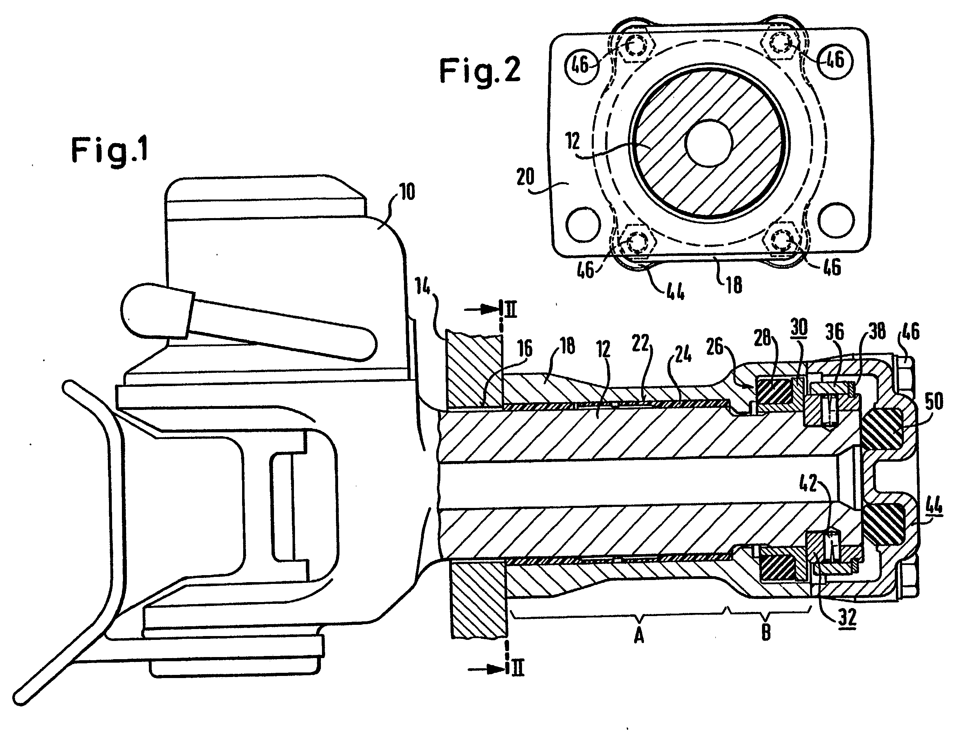

In Fig. 1 ist der Kupplungskörper mit 10 bezeichnet. Der Kupplungskörper 10 weist eine rohrförmige Zugstange 12 auf. Die Zugstange 12 durchsetzt eine Traverse 14, die in herkömmlicher Weise an dem Zugfahrzeug angebracht ist. Die Traverse 14 ist für den Durchgang der Zugstange 12 mit einer Traversenbohrung 16 genormter Größe ausgeführt. Der Außenquerschnitt der Zugstange 12 am Orte des Durchgangs durch die Traverse 14 und in dem anschließenden Längsabschnitt A entspricht ungefähr dem Querschnitt der Traversenbohrung 16. An der Traverse 14 ist ein Lagerrohr 18 angeflanscht vermittels eines in Fig. 2 erkennbaren Flansches 20. Diese Lagerrohr 18 weist einen Durchgang 22 auf, der unter Vermittlung einer Gleithülse 24 die Zugstange 12 aufnimmt. In einem Endabschnitt B des Lagerrohrs 18 ist eine Schulterformation 26 vorgesehen, die von einer radial äußeren ersten Schulterfläche 26a und einer radial inneren zweiten Schulterfläche 26b gebildet ist. An der ersten Schulterfläche 26a liegt ein ringförmiger Zugkraftpuffer 28 an, der mit seinem anderen Ende an einem radial auswärts gerichteten Flansch 30a eines L-Querschnittrings 30 anliegt. Der axial gerichtete Hülsenteil 30b liegt an der radial inneren Seite des Zugkraftpuffers 28 an und steht mit seinem Ende 30c der zweiten Schulterfläche 26b gegenüber. Der L-Querschnittring 30 liegt mit seinem radial auswärts gerichteten Flansch 30a an einem Zugwiderlager der Zugstange 12 in Form eines Segmentrings 32 an. Der Segmentring 32 besteht aus mindestens zwei 180° Segmenten, die wiederum L-Querschnitt haben und mit ihren radial einwärts gerichteten Schenkeln 32a in eine Segmentringaufnahmenut 34 nahe dem freien Ende der Zugstange 12 eingelegt sind. Die Segmente des Segmentrings 32 sind durch einen Segmentumfassungsring 36 gegen radiale Austrittsbewegung aus der Segmentringaufnahmenut 34 gesichert. Der Segmentumfassungsring 36 ist in axialer Richtung durch den radial auswärts gerichteten Flansch 30a des L-Querschnittrings einerseits und durch einen Federring 38 andererseits gesichert, welcher in eine Federringaufnahmenut 40 an der Außenseite des Segmentrings 32 eingefedert ist. Der Segmentring 32 ist gegen Verdrehung relativ zu der Zugstange 12 durch Kerbstifte 42 oder dergleichen gesichert, welche je zur Hälfte in einer Halbbohrung an dem radial einwärts gerichteten Schenkel 32a des Segmentrings 32 und eine Halbbohrung der Zugstange eingesetzt sind, wobei diese Halbbohrung in die endnahe Begrenzungsfläche der Segmentringaufnahmenut 34 ausmündet.

Das Lagerrohr 18 ist durch einen Deckelteil 44 abgeschlossen, der mit dem Lagerrohr durch Befestigungsschrauben 46 verschraubt ist. In einer Ringkammer 48 des Deckelteils 44 ist ein ringförmiger Schubkraftpuffer 50 aufgenommen, der andererseits an der achsnormalen Endfläche 52 der Zugstange 12 anliegt. In der Gleithülse 24 sind Schmiermittelausnehmungen 55 vorgesehen, die von einem nicht eingezeichneten Schmiermittel aus mit Öl oder Fett versorgt werden können.

Zur Montage wird wie folgt vorgegangen:

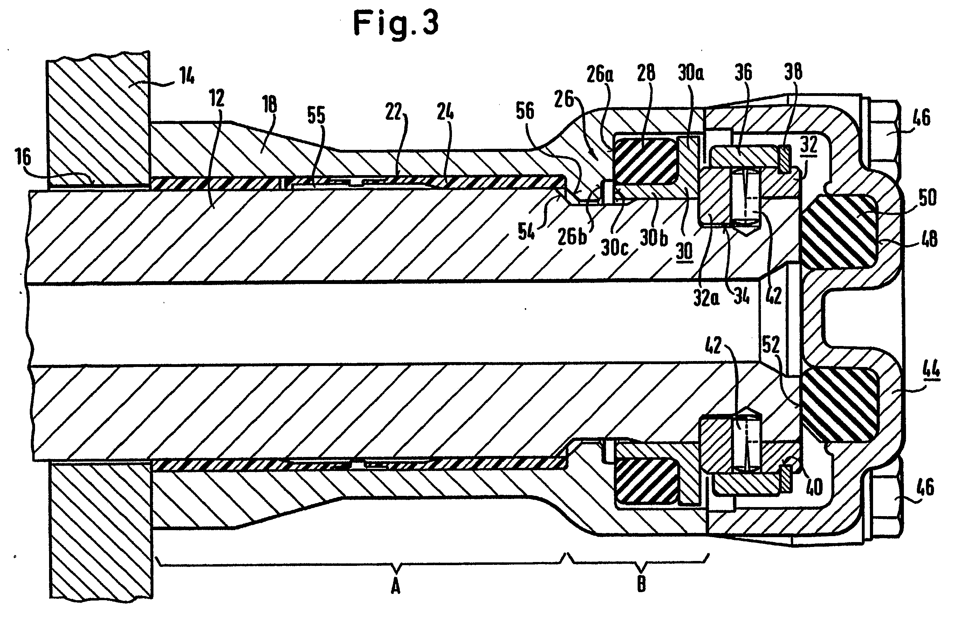

Das Lagerrohr 18 mit der eingesetzten Gleithülse 24 wird an der Traverse 14 angeflanscht. Hierauf wird die Zugstange 12 durch die Traversenbohrung 16 und den Durchgang 22 des Lagerrohrs 18 hindurchgeschoben, bis die Konusfläche 54 der Zugstange 12 an der Konusfläche 56 des Lagerrohrs 18 zur Anlage kommt. Hierauf werden der L-Querschnittring 30 und der Zugkraftpuffer 28 in die in Fig. 3 gezeichnete Stellung gebracht. Hierauf werden die 180° Segmente des Segmentrings 32 in die Segmentringaufnahmenut 34 eingelegt, gegen Verdrehung durch die Kerbstifte 42 und gegen radiale Verlagerung durch den Segmentumfassungsring 36 gesichert. Der Segmentumfassungring 36 wird durch Einlegen des Federrings 38 gesichert. Nunmehr wird der Deckelteil 44 mit eingelegtem Schubkraftpuffer 50 an dem Lagerrohr 18 angesetzt und durch die Schrauben 46 mit diesem verschraubt. Bei dieser Verschraubung werden der Zugkraftpuffer 28 und der Schubkraftpuffer 50 unter Druckvorspannung gesetzt, wobei sich die Konusfläche 54 von der Konusfläche 56 wieder abhebt, die radial innere Schulterfläche 26b aber Distanz von dem Ende 30c des Hülsenteils 30b behält. Damit ist die Montage beendet. Zugkraft wird fortan von der Zugstange über den Segmentring 32, den L-Querschnittring 30, den Zugkraftpuffer 28 und die radial äußere Schulterfläche 26a auf das Lagerrohr 18 und von dem Lagerrohr 18 auf die Traverse 14 übertragen. Übersteigt die Zugkraft ein vorbestimmtes Maß, so wird der Zugkraftpuffer 28 soweit deformiert, daß das Ende 30c der axial gerichteten Hülse 30b gegen die radial innere Schulterfläche 26b anschlägt. Man spricht deshalb bezüglich dieser Flächen von Zugwegbegrenzungsflächen. Die Zugkraftübertragung erfolgt anschließend teilweise durch die Zugwegbegrenzungsanschläge.

Eine Schubkraft, wie sie beispielsweise beim Nachlaufen des Anhängers gegen das gebremste Zugfahrzeug auftritt, wird von der Zugstange 12 über den Schubkraftpuffer 50 auf den Deckelteil 44, von dem Deckelteil 44 auf die Schrauben 46, von den Schrauben 46 auf das Lagerrohr 18 und von dem Lagerrohr 18 auf die Traverse 14 übertragen. Uberschreitet die Schubkraft ein vorbestimmtes Maß, so kommen die Konusflächen 54 und 56 zum Anschlag; man spricht bezüglich dieser Konusflächen deshalb von Schubwegbegrenzungsanschlägen. Diese Schubwegbegrenzungsanschläge übernehmen fortan einen Teil der Schubkraftübertragung.

**Patentansprüche**

1. Lagerung des Kupplungskörpers (10) einer Anhängerkupplung an einem Zugfahrzeug vermittels einer von dem Kupplungskörper (10) ausgehenden Zugstange (12), wobei diese Zugstange (12) eine Traversenbohrung (16) einer am Zugfahrzeug angebrachten Traverse (14) durchsetzt,
wobei weiter die Zugstange (12) in einem zu der Traversenbohrung (16) konzentrischen Durchgang (22) eines an der Traverse befestigten Lagerrohrs (18) geführt ist, und
wobei die Zugstange (12) an dem Lagerrohr (18) in beiden Kraftrichtungen, d.h. für Zug- und Schubkraftübertragung abgestützt ist,
**dadurch gekennzeichnet,**
daß der Querschnitt der Zugstange (12) im wesentlichen den vollen Querschnitt der Traversenbohrung (16) einnimmt und daß das Lagerrohr (18) an der kupplungskörperfernen Seite der Traverse (14) beginnend, sich ausschließlich in Richtung von dem Kupplungskörper (10) weg erstreckt.

2. Lagerung nach Anspruch 1, **dadurch gekennzeichnet,** daß der Querschnitt der Zugstange (12) in einem an die Traverse (14) angrenzenden Längsabschnitt (A) des Lagerrohrs (18) einen dem Querschnitt der Traversenbohrung (16) entsprechenden Querschnitt besitzt.

3. Lagerung nach Anspruch 1 oder 2, **dadurch gekennzeichnet,** daß die Zugstange (12) und einem der Traverse (14) fernen Endabschnitt (B) des Lagerrohrs (18) in beiden Kraftrichtungen abgestützt ist.

4. Lagerung nach einem der Ansprüche 1 bis 3, **dadurch gekennzeichnet,** daß die Zugstange (12) in Zugrichtung an einer Schulterformation (26) des Lagerrohrs (18) durch ein zugstangenseitiges Zugwiderlager (32) abgestützt ist, welches nach Durchführung der Zugstange (12) durch den Durchgang (16) an der Zugstange (12) anbringbar ist, und daß die Zugstange (12) in Schubrichtung an einem Deckel- oder Jochteil (44) abgestützt ist, welcher nach dem Anbringen des Zugwiderlagers (32) an der Zugstange (12) an dem traversenfernen Ende des Lagerrohrs (18) anbringbar ist.

5. Lagerung nach Anspruch 4, **dadurch gekennzeichnet,** daß zwischen dem zugstangenseitigen Zugwiderlager (32) und der Schulterformation (26) ein ringförmiger Zugkraftpuffer (28) angeordnet ist.

6. Lagerung nach Anspruch 5, **dadurch gekennzeichnet,** daß zwischen dem zugstangenseitigen Zugwiderlager (32) und der Schulterformation (26) Zugwegbegrenzungsanschläge (26b, 30c) vorgesehen sind.

7. Lagerung nach Anspruch 6, **dadurch gekennzeichnet,** daß der Zugkraftpuffer (28) axial zwischen einem dem Zugwiderlager (32) anliegenden achsnormalen und radial auswärts weisenden Flansch (30a) eines L-Querschnittrings (30) und einer ersten, radial äußeren Schulterfläche (26a) der Schulterformation (26) untergebracht ist und daß die Zugwegbegrenzungsanschläge (26b, 30c) von einer zweiten radial inneren Schulterfläche (26b) der Schulterformation (26) und dem zur Traverse (14) hin gerichteten Ende eines achsparallel gerichteten, dem Zugkraftpuffer (28) an seiner radial inneren Seite anliegenden Hülsenteils (30b) des L-Querschnittrings (30) gebildet sind.

8. Lagerung nach einem der Ansprüche 4 bis 7, **dadurch gekennzeichnet,** daß das Zugwiderlager (32) von einem Segmentring (32) gebildet ist, welcher in einer Segmentringaufnahmenut (34) der Zugstange (12) aufgenommen und gesichert ist.

9. Lagerung nach Anspruch 8, **dadurch gekennzeichnet,** daß der Segmentring (32) durch einen Segmentumfassungsring (36) in radialer Richtung gesichert ist und daß der Segmentumfassungring (36) auf dem Segmentring (32) in axialer Richtung durch den achsnormalen Flansch (30a) des L-Querschnittrings (30) einerseits und durch einen radial federnden Federring (38) andererseits gesichert ist, wobei letzterer in eine Federringaufnahmenut (40) in der Außenumfangsfläche des Segmentrings (32) eingefedert ist.

10. Lagerung nach einem der Ansprüche 4 bis 9, **dadurch gekennzeichnet,** daß zwischen dem traversenfernen Ende der Zugstange (12) und dem Deckel- oder Jochteil (44) ein Schubkraftpuffer (50) angeordnet ist.

11. Lagerung nach Anspruch 10, **dadurch gekennzeichnet,** daß zwischen der Zugstange (12) und dem Lagerrohr (18) Schubwegbegrenzungsanschläge (54, 56) vorgesehen sind.

12. Lagerung nach einem der Ansprüche 4 bis 11, **dadurch gekennzeichnet,** daß der Deckel- oder Jochteil (44) mit dem traversenfernen Ende des Lagerrohrs (18) verschraubt ist, ggf. unter Vorspannung des Zugkraftpuffers (28) bzw. des Schubkraftpuffers (50).

13. Lagerung nach Anspruch 8, **dadurch gekennzeichnet,** daß der Segmentring (32) an der Zugstange (12) gegen Relativverdrehung gesichert ist (bei 42).

14. Lagerung nach einem der Ansprüche 1 bis 13, **dadurch gekennzeichnet,** daß die Zugstange (12) in dem Durchgang (22) des Lagerrohrs (18) unter Vermittlung einer Gleithülse (24) insbesondere aus Kunststoff geführt ist.

15. Lagerung nach einem der Ansprüche 1 bis 14, **dadurch gekennzeichnet,** daß das Lagerrohr (18) mindestens einen Schmiermittelanschluß zur Schmierung der Gleitführung zwischen der Zugstange (12) und dem Durchgang (22) des Lagerrohrs (18) aufweist.

16. Lagerung nach einem der Ansprüche 1 bis 15, **dadurch gekennzeichnet,** daß das Lagerrohr (18) an der Traverse (14) angeflanscht ist.

**Claims**

1. A mounting for the coupling member (10) of a trailer coupling on a towing vehicle by means of a drawbar (12) issuing from the coupling member (10), wherein this drawbar (12) passes through a bore (16) in a crossbar (14) mounted on the towing vehicle, wherein the drawbar (12) is also guided in a passage (22), which is concentric to the bore (16) in the crossbar, in a mounting tube (18) fixed on the crossbar, and wherein the drawbar (12) is supported on the mounting tube (18) in both force directions, i.e. for transmitting pulling and pushing forces, characterised in that the cross section of the drawbar (12) takes up substantially the whole cross section of the bore (16) in the crossbar and in that the mounting tube (18) which begins on the side of the crossbar (14) remote from the coupling member extends solely away from the coupling member (10).

2. A mounting according to claim 1, characterised in that the cross section of the drawbar (12) in a longitudinal portion (A) of the mounting tube (18) adjacent to the crossbar (14) has a cross section corresponding to the cross section of the bore (16) in the crossbar.

3. A mounting according to claim 1 or 2, characterised in that the drawbar (12) is supported in both force directions at an end portion (B) of the mounting tube (18) remote from the crossbar (14).

4. A mounting according to one of claims 1 to 3, characterised in that the drawbar (12) is supported in the pulling direction on a shoulder formation (26) of the mounting tube (18) by a pulling abutment (32) on the drawbar side, which can be mounted on the drawbar (12) after the drawbar has been guided through the passage (16) and in that the drawbar (12) is supported in the pushing direction on a cover or yoke part (44) which can be mounted on the end of the mounting tube (18) remote from the crossbar after the pulling abutment (32) has been mounted on the drawbar (12).

5. A mounting according to claim 4, characterised in that an annular pulling force buffer (28) is arranged between the pulling abutment (32) on the drawbar side and the shoulder formation (26).

6. A mounting according to claim 5, characterised in that pulling path limiting stops (26b, 30c) are provided between the pulling abutment (32) on the drawbar side and the shoulder formation (26).

7. A mounting according to claim 6, characterised in that the pulling force buffer (28) is arranged axially between a flange (30a) of an L-section ring (30) which is normal to the axis of the pulling abutment (32) and points radially outward and a first, radially outer shoulder surface (26a) of the shoulder formation (26) and in that the pulling path limiting stops (26b, 30c) are formed by a second radially inner shoulder surface (26b) of the shoulder formation (26) and the end directed toward the crossbar (14) of a sleeve part (30b) of the L-section ring (30) which is directed parallel to the axis and rests against the pulling force buffer (28) on its radially inner side.

8. A mounting according to one of claims 4 to 7, characterised in that the pulling abutment (32) is formed by a segmental ring (32) which is accommodated and secured in a segmental ring receiving groove (34) of the drawbar (12).

9. A mounting according to claim 8, characterised in that the segmental ring (32) is secured in a radial direction by a segmental surrounding ring (36) and in that the segmental surrounding ring (36) is secured axially on the segmental ring (32) by the flange (30a) which is normal to the axis of the L-section ring (30) on the one hand and by a radially resilient spring washer (38) on the other hand, the latter being clamped in a spring washer receiving groove (40) in the external peripheral surface of the segmental ring (32).

10. A mounting according to one of claims 4 to 9, characterised in that a pushing force buffer (50) is arranged between the end of the drawbar (12) remote from the crossbar and the cover or yoke part (44).

11. A mounting according to claim 10, characterised in that pushing path limiting stops (54, 56) are provided between the drawbar (12) and the mounting tube (18).

12. A mounting according to one of claims 4 to 11, characterised in that the cover or yoke part (44) is screwed to the end of the mounting tube (18) remote from the crossbar, optionally under the initial tension of the pulling force buffer (28) or of the pushing force buffer (50).

13. A mounting according to claim 8, characterised in that the segmental ring (32) is secured against relative rotation on the drawbar (12) (at 42).

14. A mounting according to one of claims 1 to 13, characterised in that the drawbar (12) is guided in the passage (22) in the mounting tube (18) by means of a sliding sleeve (24).

15. A mounting according to one of claims 1 to 14, characterised in that the mounting tube (18) has at least one lubricant connection for lubricating the slideway between the drawbar (12) and the passage (22) in the mounting tube (18).

16. A mounting according to one of claims 1 to 15, characterised in that the mounting tube (18) is flange mounted on the crossbar (14).

**Revendications**

1. Montage sur un véhicule tracteur du corps de couplage (10) d'un attelage de remorque, par l'intermédiaire d'une barre d'attelage (12) partant du corps de couplage (10),
cette barre d'attelage (12) traversant un alésage (16) ménagé dans une traverse (14) prévue sur le véhicule tracteur,
la barre d'attelage (12) étant en outre guidée dans un passage (22), concentrique de l'alésage de traverse (16), d'un tube de montage (18) fixé sur la traverse, et
la barre d'attelage (12) étant appuyée contre le tube de montage (18) dans les deux directions de force, c'est-à-dire pour la transmission d'une force de traction et pour la transmission d'une force de poussée, caractérisé en ce que la section de la barre d'attelage (12) occupe sensiblement la totalité de la section de l'alésage de traverse (16), et en ce que le tube de montage (18), en partant du côté de la traverse (14) qui est éloigné du corps de couplage, s'étend exclusivement en éloignement du corps de couplage (10).

2. Montage selon la revendication 1, caractérisé en ce que la section de la barre d'attelage (12) présente, dans un tronçon longitudinal (1) du tube de montage (18) qui est limitrophe de la traverse (14), une valeur égale à la section de l'alésage de traverse (16).

3. Montage selon la revendication 1 ou 2, caractérisé en ce que la barre d'attelage (12), sur un tronçon terminal (B) du tube de montage (18) qui est éloigné de la traverse (14), est soutenue dans les deux directions de force.

4. Montage selon l'une des revendications 1 à 3, caractérisé en ce que la barre d'attelage (12) est appuyée dans la direction de traction contre une conformation en épaulement (26) du tube de montage (18) par une butée de traction (32) prévue du côté de la barre d'attelage, butée qui peut être disposée sur la barre d'attelage (12) après avoir guidé la barre d'attelage (12) à travers le passage (16), et en ce que la barre d'attelage (12) est appuyée dans la direction de poussée contre une partie de recouvrement ou de culasse (44), laquelle peut, après avoir disposé la butée de traction (32) sur la barre d'attelage (12), être disposée sur l'extrémité du tube de montage (18) qui est éloignée de la traverse.

5. Montage selon la revendication 4, caractérisé en ce qu'un tampon annulaire de force de traction (28) est disposé entre la butée de traction (32) située du côté de la barre d'attelage, et la conformation en épaulement (26).

6. Montage selon la revendication 5, caractérisé en ce que des butées de délimitation de course de traction (26b, 30c) sont prévues entre la butée de traction (32) située du côté de la barre d'attelage, et la conformation en épaulement (26).

7. Montage selon la revendication 6, caractérisé en ce que le tampon de force de traction (28) est logé entre une bride (30a), appliquée contre la butée de traction (32), perpendiculaire à l'axe et tournée radialement vers l'extérieur, d'une bague à section en L (30), et une première surface d'épaulement radialement extérieure (26a) de la conformation en épaulement (26), et en ce que les butées de délimitation de course de traction (26b, 30c) sont formées par une deuxième surface d'épaulement radialement intérieure (26b) de la conformation en épaulement (26), et par l'extrémité tournée vers la traverse (14) d'une partie de douille (30b), orientée parallèlement à l'axe et s'appliquant contre le tampon de force de traction (28) sur son côté radialement intérieur, de la bague à section en L (30).

8. Montage selon l'une des revendications 4 à 7, caractérisé en ce que la butée de traction (32) est formée par une bague segmentée (32) qui est reçue et bloquée dans une rainure réceptrice de bague segmentée (34) de la barre d'attelage (12).

9. Montage selon la revendication 8, caractérisé en ce que la bague segmentée (32) est bloquée dans le sens radial par une bague d'entourage de segment (36), et en ce que la bague d'entourage de segment (36) est bloquée dans le sens axial sur la bague segmentée (32) d'une part par la bride perpendiculaire à l'axe (30a) de la bague à section en L (3a), et d'autre part par une rondelle-ressort (38) radialement élastique, laquelle est encastrée élastiquement dans une rainure réceptrice de rondelle-ressort (40) dans la surface périphérique extérieure de la bague segmentée (32).

10. Montage selon l'une des revendications 4 à 9, caractérisé en ce qu'un tampon de force de poussée (50) est disposé entre l'extrémité de la barre d'attelage (12) qui est éloignée de la traverse, et la partie de recouvrement ou de culasse (44).

11. Montage selon la revendication 10, caractérisé en ce que des butées de délimitation de course de poussée (54, 56) sont prévues entre la barre d'attelage (12) et le tube de montage (18).

12. Montage selon l'une des revendications 4 à 11, caractérisé en ce que la partie de recouvrement ou de culasse (44) est boulonnée à l'extrémité du tube de montage (18) qui est éloignée de la traverse, éventuellement avec précontrainte du tampon de force de traction (28) ou selon le cas du tampon de force de poussée (50).

13. Montage selon la revendication 8, caractérisé en ce que la bague segmentée (32) est bloquée en rotation relative (en 42) sur la barre d'attelage (12).

14. Montage selon l'une des revendications 1 à 13, caractérisé en ce que la barre d'attelage (12) est guidée dans le passage (22) du tube de montage (18) par l'intermédiaire d'un manchon coulissant (24), notamment en matière plastique.

15. Montage selon l'une des revendications 1 à 14, caractérisé en ce que le tube de montage (18) présente au moins un raccord d'avancée de lubrifiant, pour la lubrification du guidage coulissant de la barre d'accouplement (12) dans le passage (22) du tube de montage (18).

16. Montage selon l'une des revendications 1 à 15, caractérisé en ce que le tube de montage (18) est bridé sur la traverse (14).

Fig.1

Fig.2

EP 0 213 284 B1

Fig.3